# EUROPÄISCHE PATENTSCHRIFT

(11) **EP 3 625 493 B1**
(45) Veröffentlichungstag und Bekanntmachung des Hinweises auf die Patenterteilung: **19.01.2022**
(21) Anmeldenummer: 18720230.4
(22) Anmeldetag: 25.04.2018
(51) Int. Cl.: F16L 33/03

(54) **POSITIONIEREINRICHTUNG FÜR EINE FEDERBANDSCHELLE**
POSITIONING DEVICE FOR A SPRING CLAMP
DISPOSITIF DE POSITIONNEMENT POUR UN COLLIER À BANDE DE RESSORT

(30) Priorität: 16.05.2017 DE 102017110629
(43) Veröffentlichungstag der Anmeldung: 25.03.2020
(73) Patentinhaber: NORMA Germany GmbH, 63477 Maintal (DE)
(72) Erfinder: BREIDEBAND, Linda, 60594 Frankfurt am Main (DE); SOMMER, Michael, 63654 Büdingen (DE); LANGE, Frank, 63654 Büdingen (DE)
(74) Vertreter: Patentanwälte Olbricht Buchhold Keulertz
(86) Internationale Anmeldenummer: PCT/EP2018/060573
(87) Internationale Veröffentlichungsnummer: WO 2018/210538

(56) Entgegenhaltungen:
- WO-A1-2008/022853
- DE-A1- 10 324 236
- DE-A1-102008 047 038
- DE-A1-102012 204 370
- DE-U1-202011 005 396
- FR-A1- 2 887 321

## Beschreibung

Die Erfindung betrifft eine Federbandschelle mit einem Schellenband und einer Positioniereinrichtung zur Vorpositionierung der Federbandschelle an einem Schlauchende eines Schlauches, wobei die Positioniereinrichtung ein Trägerband aufweist, das mit einem Anlagebereich einer Außenseite des Schellenbandes anliegt und das Trägerband in einer, bezogen auf die Federbandschelle, axialen Richtung auf einer Seite einen Positionierer mit einem an einem Ende des Trägerbands angeordneten Fixierer aufweist und an dem anderen Ende des Trägerbands einen Halter aufweist.

Eine Federbandschelle dient beispielsweise dazu, einen Schlauch auf einem Stutzen festzuklemmen. Hierzu wird eine Federbandschelle auf einen Schlauch und/oder einen Stutzen in einem vorgespannten Zustand aufgeschoben. Zur Herstellung einer dichten Verbindung zwischen Schlauch und Stutzen wird die Vorspannung der Federbandschelle gelöst, sodass die Federbandschelle durch ihre Spannkraft den Schlauch mit dem Stutzen dichtend verbindet. Zur Herstellung der Spannkraft von Federbandschellen werden Werkstoffe mit hohen Festigkeiten gewählt, welche zum Korrosionsschutz mit einer Beschichtung versehen werden.

Vor dem Auslösen der Federbandschelle und dem damit verbundenen Aufspannen auf dem Zusammenbau zwischen dem Schlauch und dem Stutzen weist die Federbandschelle zu deren Montage einen Innendurchmesser auf, der größer ist als der Außendurchmesser des Schlauchs oder des Stutzens im Montagebereich.

Dadurch ist die Federbandschelle vor der endgültigen Montage nicht fest auf dem vorläufigen Zusammenbau aus Schlauch und Stutzen fixierbar.

Die DE 10 2006 048 344 A1 beschreibt eine Schlauchschelle, bei der zur Erleichterung der Vormontage an einer Außenseite des Schellenbands der Schlauchschelle eine Positionieranordnung angeordnet ist, die einen Positionierer aufweist, der in die Schlauchwand eines Schlauches eindrückbar ist. Die in die Schlauchwand eindrückbaren Krallen sind in einer Umfangsrichtung des Schellenbands angeordnet. Weiterhin weist die Schlauchschelle eine zweite Positionieranordnung auf, die auf der Innenseite des Schellenbands angeordnet ist und neben axialen Anschlägen ebenfalls in die Schlauchwand eindrückbare Krallen aufweist. Die zweite Positionierandordnung erstreckt sich über einen Großteil des Umfangs der Schlauchschelle.

Die DE 10 2008 047 038 A1 beschreibt eine Federbandschelle mit einer Vorpositioniereinrichtung mit einem Trägerband, das auf der Außenseite der Federbandschelle angeordnet ist und mittels mehrerer Halter, die das Schellenband der Federbandschelle umgreifen, auf der Federbandschelle fixierbar ist. Zur Aufnahme der verschiedenen Halter und zur Aufnahme der zur Fixierung der Federbandschelle vorgesehenen Spitzen erstreckt sich die vorbekannte Positioniereinrichtung über einen Großteil des Umfangs der Federbandschelle.

Die DE 20 2011 005396 U1 beschreibt eine Schlauchschelle mit einer Positioniereinrichtung für den Anschluss von flexiblen Schläuchen im Bereich der Automobilindustrie.

Den aus dem Stand der Technik bekannten Lösungen für eine Positioniereinrichtung einer Schelle ist gemein, dass die Positioniereinrichtungen mit einem verhältnismäßig großen Materialaufwand hergestellt sind, da die bekannten Lösungen mehrteilig sind und/oder sich über einen großen Teil des Umfangs der jeweiligen Schelle erstrecken.

Der Erfindung liegt die Aufgabe zugrunde eine Positioniereinrichtung vorzusehen, mittels derer eine Federbandschelle zuverlässig an einem Schlauchende vorpositionierbar ist, wobei die Positioniereinrichtung mit einem minimalen Material- und Herstellaufwand herstellbar ist. Eine etwaige korrosionsschützende Beschichtung der Federbandschelle soll durch die Positioniereinrichtung nicht verletzt werden.

Die Aufgabe wird gemäß dem kennzeichnenden Teil des Anspruchs 1 gelöst.

Ein Vorteil ist, dass der Positionierer der Positioniereinrichtung zwei Funktionen übernimmt, nämlich die Fixierung der Federbandschelle auf dem Schlauchende mittels des Fixierers und die Ausrichtung der Federbandschelle in axialer Richtung auf dem Schlauchende mittels des senkrecht stehenden zweiten Bereichs. Somit ist die Positioniereinrichtung vorteilhafterweise mit einem in Umfangsrichtung schmalen Trägerband ausbildbar, denn bevorzugt sind alle Elemente der Positioniereinrichtung in axialer Richtung hintereinander entlang des Trägerbands anordenbar. Dabei kann eine Positioniereinrichtung mit verschiedenen Nenndurchmessern der Federbandschelle kombiniert werden. Je nach Nenndurchmesser der Federbandschelle liegt die Positioniereinrichtung dann mit ihrem vollständig oder zumindest teilweise flächig auf der Außenseite des Schellenbands auf. In jedem Fall wird eine Beschichtung der Außenseite des Schellenbands nicht oder nur schwach belastet.

Daher ist es besonders vorteilhaft, dass das Trägerband in einer Umfangsrichtung der Federbandschelle eine geringere Erstreckung aufweist, als in der axialen Richtung. Auf diese Weise ist das Trägerband materialsparend herstellbar. Insbesondere ist das Trägerband durch Stanzung und/oder Umformung eines Streifens herstellbar. Das Trägerband besteht vorzugsweise aus Metall, besonders bevorzugt aus einem korrosionsfesten Metall. Die Korrosionsbeständigkeit kann vorzugsweise aus den Materialeigenschaften des Metalls herrühren und bevorzugt durch eine Beschichtung des Metalls erreicht werden. Durch das Vorsehen einer Positioniereinrichtung aus Metall ergibt sich der Vorteil, dass das Trägerband gut mittels Stanzung und/oder Umformung herstellbar ist. Außerdem ergibt sich durch das Vorsehen eines korrosionsfesten Metalls der Vorteil, dass die Federbandschelle mit der Positioniereinrichtung auch in korrosiven Umgebungen einsetzbar ist.

Vorzugsweise ist vorgesehen, dass der Steg, der Positionierer und der Halter axial außerhalb der Federbandschelle liegen. Dies gestaltet die Positioniereinrichtung in besonders vorteilhafter Weise fort, da diese Elemente der Sicherung der Positioniereinrichtung auf der Federbandschelle und der Sicherung der Federbandschelle mit der Positioniereinrichtung auf dem Schlauchende dienen. Die Lage des Stegs und des Halters außerhalb des Schellenbands gestaltet sich vorteilhaft, da somit der Steg und der Halter das Schellenband in der radialen Richtung von außen kommend um das Schellenband reichen und somit die Positioniereinrichtung auf dem Schellenband anordnen, ohne, dass der Steg und der Halter zwischen dem Schlauchende und der Innenseite des Schellenbands liegen. Dies ist vorteilhaft, da hierdurch die Anpresskraft des Schellenbands an das Schlauchende besonders gleichmäßig ist. Durch die gleichmäßige Anpresskraft erhöht sich die Zuverlässigkeit und somit die Dichtigkeit der Verbindung, da keine Bereiche des Schlauchendes und/oder der Federbandschelle besonders stark belastet werden und dadurch unter mechanischer Beanspruchung versagen könnten.

Bevorzugter Weise ist vorgesehen, dass der Steg seitlich an dem Schellenband anliegt. Dadurch ergibt sich der Vorteil, dass die Positioniereinrichtung auf dem Schellenband mittels des Stegs festklemmbar ist. Außerdem ist durch die Anlage des Stegs in besonders vorteilhafter Weise ein Verdrehen der Positioniereinrichtung gegen die axiale Richtung der Federbandschelle verhindert. Durch die Anlage des Stegs am Schellenband ist sichergestellt, dass das Trägerband und das Schellenband stets im Wesentlichen senkrecht zueinanderstehen.

Erfindungsgemäß ist, dass in dem Bereich des Stegs zumindest ein Einschnitt vorgesehen ist, wobei durch den jeweiligen Einschnitt eine Klemmlasche in Richtung des Schellenbands aus dem Trägerband umbiegbar ist. Durch das Umbiegen eines Teils aus einem Einschnitt des Trägerbands, das den Steg bildet, wobei der Einschnitt im Bereich des Stegs ausgebildet ist, lässt sich die Positioniereinheit zuverlässig und verliersicher auf dem Schellenband anordnen. Dies ergibt sich insbesondere dann, wenn die Klemmlasche in Richtung des Schellenbands umgebogen wird und in radialer Richtung um das Schellenband reicht. Bevorzugt ist der Einschnitt als Ausstanzung ausgebildet, die in dem Steg liegt und sich umgekehrt U-förmig von der Seite des Stegs erstreckt, die sich an den Anlagebereich des Trägerbands anschließt.

Erfindungsgemäß ist, dass die Klemmlasche das Schellenband in einer radialen Richtung zumindest teilweise umgreift. Durch das teilweise Umgreifen des Schellenbands durch die Klemmlasche in radialer Richtung ergibt sich der Vorteil, dass die Verliersicherheit der Positioniereinrichtung von dem Schellenband erhöht wird.

Eine weitere bevorzugte Weiterbildung sieht vor, dass der Anlagebereich in einer Umfangsrichtung der Federbandschelle eine Biegung aufweist. Bevorzugt entspricht die Biegung im Anlagebereich im Wesentlichen der Biegung des Schellenbands auf dessen Außenseite. Besonders bevorzugt entspricht der Biegeradius des Trägerbands bezogen auf die Federbandschelle auf dessen Innenseite dem Biegeradius der Außenseite des Schellenbands. Hierdurch ergibt sich der Vorteil, dass das Trägerband vollflächig auf dem Schellenband aufliegt. Durch die vollflächige Auflage werden die Fixier- und Haltekräfte, die sich einerseits durch die Fixierung der Positioniereinrichtung auf dem Schlauchende und andererseits durch die Klemmung der Federbandschelle auf dem Schlauch ergeben, gleichmäßig aufgenommen und ideal über die Positioniereinrichtung verteilt.

Vorzugsweise ist vorgesehen, dass der Positionierer einen dritten Bereich aufweist, der entlang des Trägerbands eine kürzere Erstreckung hat, als der erste Bereich des Positionierers. Dadurch, dass der dritte Bereich eine kürzere Erstreckung hat, als der erste Bereich, ergibt sich der Vorteil, dass der dritte Bereich und der Fixierer in axialer Richtung nicht in den Innenbereich der Federbandschelle hineinragen kann. Die Klemmung des Schlauches beispielsweise auf einem Stutzen wird somit nicht durch den dritten Bereich des Positionierers beeinträchtigt.

Eine besonders zweckmäßige Weiterbildung sieht vor, dass der dritte Bereich des Positionierers auf einer Innenseite des Trägerbands einen stumpfen oder rechten Winkel mit dem zweiten Bereich des Positionierers einschließt. Hierdurch ergibt sich der Vorteil, dass das Schlauchende in einer weiteren Richtung von dem Positionierer umfasst ist. Somit ist eine zuverlässigere Positionierung und/oder Fixierung der Federbandschelle auf einem Schlauch gegeben.

Eine bevorzugte Weiterbildung sieht vor, dass der dritte Bereich des Positionierers um ein Schlauchende eines Schlauches umbiegbar ist und hierbei der zweite Bereich des Positionierers in der axialen Richtung an dem Schlauchende des Schlauchs anliegt. Durch diese besonders vorteilhafte Weiterbildung wird das Schlauchende komplett durch den Positionierer umgriffen.

Vorzugsweise ist vorgesehen, dass der Fixierer im Endbereich des Trägerbands gegenüber dem Halter angeordnet ist. Durch diese Anordnung ist die Positioniereinrichtung mit dem Positionierer vorteilhafterweise im Endbereich des Schlauchs angeordnet. Der Positionierer ist hierbei so anordenbar, dass er zur Positionierung der Federbandschelle auf dem Schlauchende das Schlauchende zumindest teilweise umgreift. Auf der in axialer Richtung anderen Seite der Positioniereinrichtung befindet sich lediglich der Halter, der für die Verbindung der Positioniereinrichtung mit dem Schellenband sorgt. Der Halter ist an der Positionierung der Federbandschelle auf dem Schlauchende also nicht beteiligt. Somit ist die Federbandschelle besonders komfortabel auf dem Schlauchende anordenbar und schließlich auch positionierbar.

Bevorzugter Weise ist vorgesehen, dass der Halter in einer, auf die Federbandschelle bezogenen, radialen Richtung das Schellenband der Federbandschelle zumindest teilweise umgreift. Dadurch ergibt sich der Vorteil, dass die Verliersicherheit der Positioniereinrichtung von dem Schellenband im unmontierten Zustand der Federbandschelle erhöht wird. Im montierten Zustand der Federbandschelle werden die Fixier- und Haltekräfte, die sich einerseits durch die Fixierung der Positioniereinrichtung auf dem Schlauchende und andererseits durch die Klemmung der Federbandschelle auf dem Schlauch ergeben, durch das teilweise Umgreifen des Halters um das Schellenband in radialer Richtung aufgenommen.

Besonders bevorzugter Weise ist vorgesehen, dass der Halter zumindest eine Haltelasche aufweist, die als Ausformung des Trägerbands ausgebildet ist. Durch das Vorsehen zumindest einer Haltelasche als Ausformung des Schellenbands lässt sich Material einsparen. Bevorzugt werden zwei Haltelaschen vorgesehen. Hierdurch ergibt sich der Vorteil, dass durch die Haltelaschen die Positioniereinrichtung gegen ein Verdrehen der Federbandschelle gegeben ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Darstellung einer Federbandschelle mit einer Positioniereinrichtung,
- Fig. 2: in einer schematischen Darstellung eine Draufsicht auf die Positioniereinrichtung,
- Fig. 3: eine schematische Darstellung einer Seitenansicht der Positioniereinrichtung und
- Fig. 4: eine schematische Darstellung eines Schnitts in axialer Richtung entlang der Ebene S-S' durch die Positioniereinrichtung,
- Fig. 5: eine schematische, perspektivische Detaildarstellung des Fixierers einer alternativen Ausgestaltung der Positioniereinrichtung.

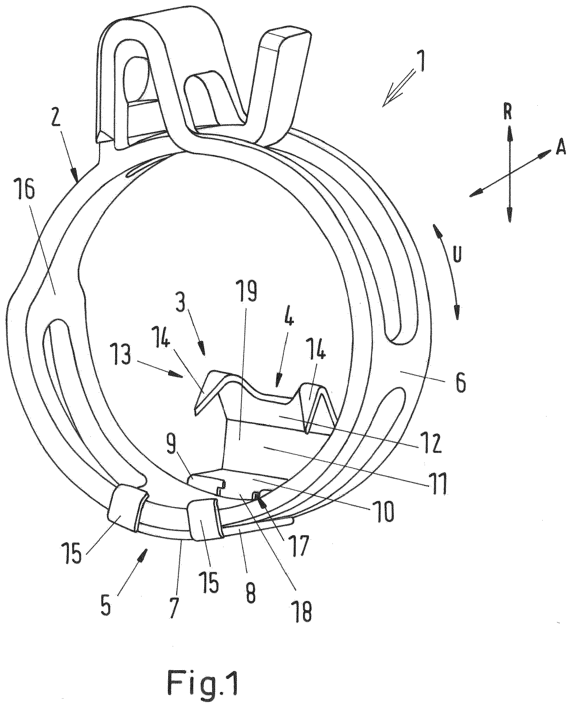

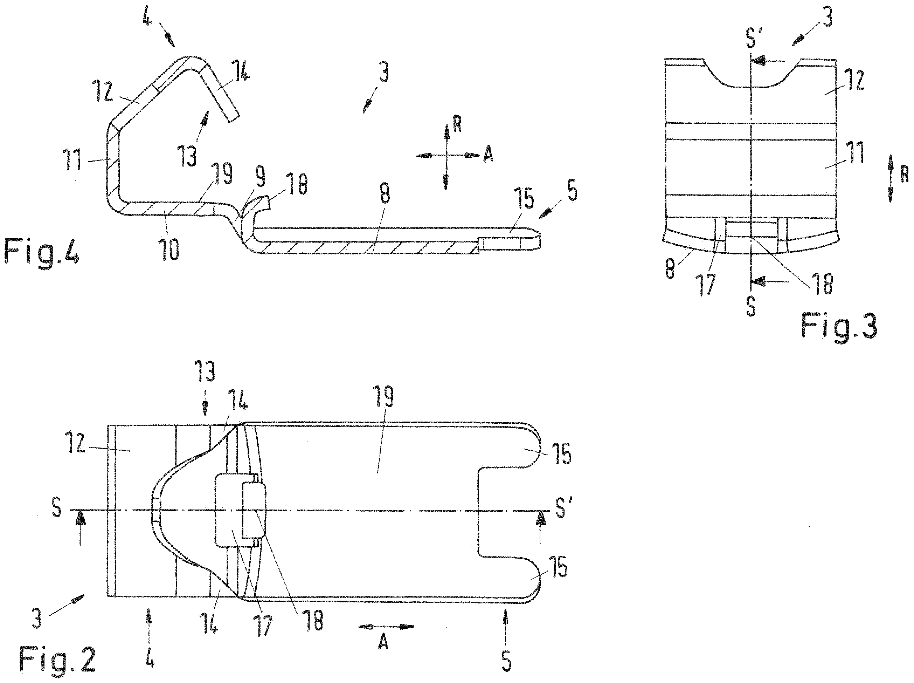

Alle nachfolgend beschriebenen Elemente beziehen sich jeweils auf alle Figuren, wobei die Bezugszeichen zur Bezeichnung der Elemente über alle Figuren hinweg einheitlich verwendet werden. In Figur 1 ist ein Zusammenbau aus Federbandschelle 1 mit einem Schellenband 2 und einer Positioniereinrichtung 3 gezeigt. Die Figuren 2 bis 4 zeigen unterschiedliche Ansichten der Positioniereinrichtung 3.

Die Positioniereinrichtung 3 weist in einer axialen Richtung A der Federbandschelle 1 auf einer Seite der Federbandschelle 1 einen Positionierer 4 und auf der anderen Seite einen Halter 5 auf. Die Positioniereinrichtung 3 ist auf einer Außenseite 6 des Schellenbands 2 der Federbandschelle 1 angeordnet und ist aus einem Trägerband 7 gebildet. Die Positioniereinrichtung 3 weist in dem Teil des Trägerbands 7, der an der Außenseite 6 des Schellenbands 2 der Federbandschelle 1 anliegt, einen Anlagebereich 8 auf.

Das Trägerband 7 erstreckt sich bezogen auf die Federbandschelle 1 in einer axialen Richtung A. Nachfolgend wird das Trägerband 7 beginnend an einem Ende entlang der axialen Richtung A beschrieben. An einem Ende des Trägerbands 7 ist der Halter 5 angeordnet. An den Halter 5 schließt sich der Anlagebereich 8 an. Weiter weist das Trägerband 7 in der axialen Richtung A gesehen, einen Steg 9 auf. An den Steg 9 schließt der Positionierer 4 an, der sich bis zu dem Ende des Trägerbands 7 erstreckt, das dem Halter 5 gegenüberliegt. Der Positionierer 4 weist einen ersten Bereich 10 auf, der sich an den Steg 9 anschließt. Entlang des Trägerbands 7 schließen sich als Teil des Positionierers 4 weiter ein zweiter Bereich 11 und ein dritter Bereich 12 an. Weiter befindet sich an dem Ende des Positionierers 4 und somit an dem Ende des Trägerbands 7, das dem Halter 5 gegenüberliegt, ein Fixierer 13.

Der Anlagebereich 8 weist in einer Umfangsrichtung U der Federbandschelle 1 eine Krümmung auf, die im Wesentlichen der Krümmung der Außenseite 6 der Federbandschelle 1 in Umfangsrichtung U entspricht. Der Halter 5 weist darüber hinaus ebenfalls in Umfangsrichtung U eine Krümmung auf, die der Krümmung des Anlagebereichs 8 entspricht. Der Steg 9 weist auf der Seite, an der der Steg 9 an dem Anlagebereich 8 angrenzt, ebenfalls die Krümmung des Anlagebereichs 8 auf. Der Steg 9 weist an der Seite, an der der Steg 9 an den Positionierer 4 angrenzt, keine Krümmung auf. Der Positionierer 4 weist in Umfangsrichtung U der Federbandschelle 1 keine Krümmung auf.

Die Positioniereinrichtung 3 weist auf der dem Halter 5 gegenüberliegenden Seite des Schellenbands 2 der Federbandschelle 1 zwischen dem Anlagebereich 8 und dem Positionierer 4 einen Steg 9 auf. Der Steg 9 erstreckt sich von dem Anlagebereich 8 der Positioniereinrichtung 3 in einer, bezogen auf die Federbandschelle 1, radialen Richtung R nach innen. Hierbei schließen der Anlagebereich 8 und der Steg 9 auf ihren radial inneren Seiten einen stumpfen Winkel oder einen rechten Winkel ein. Der Steg 9 befindet sich in axialer Richtung A außerhalb der Federbandschelle 1. In radialer Richtung R erstreckt sich der Steg 9 bezogen auf die Federbandschelle 1 nach innen.

Die Positioniereinrichtung 3 weist weiterhin einen ersten Bereich 10 auf, der sich direkt an den Steg 9 anschließt. Der erste Bereich 10 ist im Wesentlichen parallel zu dem Anlagebereich 8 ausgerichtet und liegt in axialer Richtung A außerhalb der Federbandschelle 1. Der erste Bereich 10 liegt somit, in einer radialen Richtung R gesehen, bezogen auf die Federbandschelle 1 weiter innen, als der Anlagebereich 8 der Positioniereinrichtung 3.

An den ersten Bereich 10 des Positionierers 4 schließt sich ein zweiter Bereich 11 des Positionierers 4 an, der im Wesentlichen senkrecht zu dem ersten Bereich 10 steht. Der zweite Bereich 11 erstreckt sich in der, auf die Federbandschelle bezogenen, radialen Richtung R nach innen.

An den zweiten Bereich 11 des Positionierers 4 schließt sich ein dritter Bereich 12 des Positionierers 4 an. Der zweite Bereich 11 und der dritte Bereich 12 des Positionierers 4 schließen auf ihren der Federbandschelle 1 zugewandten Seite einen stumpfen Winkel oder einen rechten Winkel ein. Der dritte Bereich 12 des Positionierers 4 ist, bezogen auf die axiale Richtung A der Federbandschelle 1, außerhalb der Federbandschelle 1 angeordnet. Außerdem hat der dritte Bereich 12 des Positionierers 4 entlang des Trägerbands 7 eine kürzere Erstreckung, als der erste Bereich 10 des Positionierers 4.

An den dritten Bereich 12 des Positionierers 4 schließt sich als Teil des Positionierers ein Fixierer 13 an. Der Fixierer 13 weist mindestens eine Spitze 14 auf. Der Fixierer 13 steht zu dem dritten Bereich 12 des Positionierers 4 im Wesentlichen senkrecht. Der Fixierer 13 befindet sich, bezogen auf die Federbandschelle 1, in der axialen Richtung A außerhalb der Federbandschelle 1 und in einer axialen Richtung A gesehen an dem Ende des Trägerbands 7, das dem Halter 5 gegenüberliegt.

In der, bezogen auf die Federbandschelle 1, radialen Richtung R erstreckt sich der Steg 9 von dem Anlagebereich 8 so weit nach innen, dass die Innenseite 16 des Schellenbands 2 der Federbandschelle 1 und die radial nach innen zeigende Seite des Trägerbands 7 im ersten Bereich 10 des Positionierers 4 in etwa auf einer Höhe liegen.

Die Erstreckung des zweiten Bereichs 11 des Positionierers 4 entspricht, ebenfalls auf die radiale Richtung R der Federbandschelle 1 bezogen, nach innen in etwa der Wandstärke des Schlauchmantels im Bereich des Schlauchendes.

Der dritte Bereich 12 des Positionierers 4 ist um dessen Anlagelinie an den zweiten Bereich 11 des Positionierers 4 in radialer Richtung R nach außen umbiegbar, sodass der dritte Bereich 12 des Positionierers 4 und der erste Bereich 10 des Positionierers 4 in eine Lage zueinander bringbar sind, in der der erste Bereich 10 des Positionierers 4 und der dritte Bereich 12 des Positionierers 4 parallel zueinander liegen. Die mindestens eine Spitze 14 des Fixierers 13 des Positionierers 4 erstreckt sich über eine Länge, die kleiner oder gleich der Erstreckung des zweiten Bereichs 11 des Positionierers 4 entlang des Trägerbands 7 ist.

Die mindestens eine Spitze 14 ist derart ausgestaltet, dass sie durch Umbiegen des dritten Teils 12 des Positionierers 4 in der radialen Richtung R, bezogen auf die Federbandschelle 1 gesehen nach außen, in eine Wandung eines Schlauchs einbringbar ist. Bei einem in eine Schlauchwandung eingebrachten Spitze 14 ist der Winkel, der zwischen den Innenseiten des zweiten Bereichs 11 und des dritten Bereichs 12 eingeschlossen ist, ein rechter Winkel.

Bevorzugt weist der Fixierer 13 zwei Spitzen 14 auf, die jeweils an dem dem Halter 5 gegenüberliegenden Ende des Trägerbands 7 einen spitzen Winkel aufweisen. Senkrecht zu der axialen Richtung A weist das Trägerband 7 zwischen den Spitzen 14 des Fixierers 13 einen Radius auf. Der Winkel, der zwischen dem Fixierer 13 und dem dritten Bereich 12 eingeschlossen ist, ist ein spitzer oder ein rechter Winkel.

Bevorzugt ergibt die Summe des Winkels, der zwischen dem zweiten Bereich 11 und dritten Bereich 12 eingeschlossen ist und des Winkels, der zwischen dem dritten Bereich 12 und dem Fixierer 13 eingeschlossen ist, 180°.

Hierbei ist der zweite Bereich 11 des Positionierers 4 derart mit dem Schlauch anordenbar, dass der zweite Bereich 11 an einem Schlauchende im Bereich der Schlauchwandung axial anliegt. Bevorzugt entspricht die Erstreckung des zweiten Bereichs 11 der Wandstärke des Schlauchs.

Der Halter 5 weist mindestens eine, insbesondere zwei Haltelaschen 15 auf. Die jeweilige Haltelasche 15 kann in Umfangsrichtung U der Federbandschelle 1 gesehen in dem äußeren Bereich des Trägerbands 7 angeordnet sein und sich direkt an den Anlagebereich 8 der Positioniereinrichtung 3 anschließen.

Die jeweilige Haltelasche 15 steht im Wesentlichen senkrecht zu dem Anlagebereich 8 der Positioniereinrichtung 3 erstreckt sich in der radialen Richtung R an dem Schellenband 2 der Federbandschelle 1. Bevorzugt greift die jeweilige Haltelasche um das Schellenband 2 der Federbandschelle um.

Der Steg 9 weist bevorzugt einen teilweisen Einschnitt 17 auf, der sich in dem Trägerband umgekehrt U-förmig von dem Anlagebereich erstreckt. Die durch den Einschnitt 17 freigestellte Klemmlasche 18 ist in axialer Richtung A von dem Steg 9 des Positionierers 4 hin zu dem Schellenband 2 geneigt. Die Klemmlasche 18 liegt an dem Schellenband an und erstreckt sich in radialer Richtung. Bevorzugt umgreift die Klemmlasche 18 das Schellenband und reicht auf die Innenseite des Schellenbands der Federbandschelle. Bevorzugt ist der Einschnitt 17 als Ausstanzung in dem Steg 9 ausgebildet.

Das Trägerband 7 umfasst alle Bereiche der Positioniereinrichtung 3, nämlich den Halter 5, den Anlagebereich 8 und den Positionierer 4. Die Positioniereinrichtung 3 ist einstückig und aus einem Metallstreifen, der das Trägerband 7 bildet, durch Stanzungen und Umformungen herstellbar.

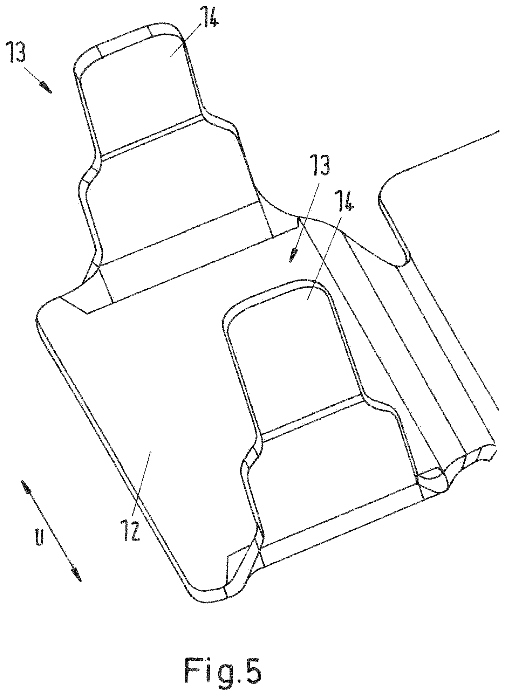

In einer alternativen Ausgestaltung nach Fig. 5 ist der Fixierer 13 in Umfangsrichtung U jeweils seitlich an dem dritten Bereich 12 angebracht. Hierbei liegt bevorzugt in Umfangsrichtung U auf jeder Seite jeweils eine Spitze 14, die im Wesentlichen senkrecht zu dem dritten Bereich 12 angeordnet ist. Die Spitzen 14 sind hierbei bevorzugt als Laschen ausgebildet. Alternativ weisen die Spitzen 14 einen spitzen Winkel in einem dem dritten Bereich 12 gegenüberliegenden Teil auf (nicht dargestellt).

Die Erfindung ist nicht auf eine der vorbeschriebenen Ausführungsformen beschränkt, sondern in vielfältiger Weise abwandelbar. So kann die Positioniereinrichtung beispielsweise auch in Form eines Clips ausgebildet sein, der mit verschiedenen Federbandschellen kombinierbar ist.

### Bezugszeichenliste

- 1: Federbandschelle
- 2: Schellenband
- 3: Positioniereinrichtung
- 4: Positionierer
- 5: Halter
- 6: Außenseite des Schellenbands
- 7: Trägerband
- 8: Anlagebereich
- 9: Steg
- 10: erster Bereich des Positionierers
- 11: zweiter Bereich des Positionierers
- 12: dritter Bereich des Positionierers
- 13: Fixierer
- 14: Spitze
- 15: Haltelasche
- 16: Innenseite des Schellenbands
- 17: Einschnitt
- 18: Klemmlasche
- A: Axiale Richtung
- R: Radiale Richtung
- U: Umfangsrichtung

## Patentansprüche

1. Federbandschelle (1) mit Schellenband (2) und einer Positioniereinrichtung (3) zur Vorpositionierung der Federbandschelle (1) an einem Schlauchende eines Schlauches, wobei die Positioniereinrichtung (3) ein Trägerband (7) aufweist, das mit einem Anlagebereich (8) an einer Außenseite (6) des Schellenbandes (2) anliegt und das Trägerband (7) in einer, bezogen auf die Federbandschelle (1), axialen Richtung (A) auf einer Seite einen Positionierer (4) mit einem am Ende des Trägerbands (7) angeordneten Fixierer (13) aufweist und an einem anderen Ende des Trägerbands (7) einen Halter (5) aufweist, wobei zwischen dem Anlagebereich (8) und dem Positionierer (4) ein Steg (9) in dem Trägerband (7) ausgebildet ist, der in einer radialen Richtung (R), bezogen auf die Federbandschelle (1), nach innen ausgerichtet ist und das Trägerband (7) im Bereich des Positionierers (4) mindestens zwei Bereiche (10, 11) aufweist, wobei der erste Bereich (10) sich in der axialen Richtung (A) vom Schellenband weg an den Steg (9) anschließt und der zweite Bereich (11) sich im Wesentlichen senkrecht an den ersten Bereich (10) anschließt, wobei in dem Bereich des Stegs (9) zumindest ein Einschnitt (17) vorgesehen ist, wobei durch den jeweiligen Einschnitt (17) eine Klemmlasche (18) in Richtung des Schellenbandes (2) aus dem Trägerband (7) umbiegbar ist, **dadurch gekennzeichnet, dass** die Klemmlasche (18) das Schellenband (2) in einer radialen Richtung (R) zumindest teilweise umgreift.

2. Federbandschelle (1) nach einem der vorhergehenden Ansprüche, **dadurch gekennzeichnet, dass** das Trägerband (7) in einer Umfangsrichtung (U) der Federbandschelle eine geringere Erstreckung aufweist, als in der axialen Richtung (A).

3. Federbandschelle (1) nach Anspruch 1, **dadurch gekennzeichnet, dass** der Steg (9), der Positionierer (4) und der Halter (5) axial außerhalb der Federbandschelle (1) liegen.

4. Federbandschelle (1) nach einem der vorhergehenden Ansprüche, **dadurch gekennzeichnet, dass** der Steg (9) seitlich an dem Schellenband (2) anliegt.

5. Federbandschelle (1) nach einem der vorhergehenden Ansprüche, **dadurch gekennzeichnet, dass** der Anlagebereich (8) in einer Umfangsrichtung (U) der Federbandschelle eine Biegung aufweist.

6. Federbandschelle (1) nach einem der vorhergehenden Ansprüche, **dadurch gekennzeichnet, dass** der Positionierer (4) einen dritten Bereich (12) aufweist, der entlang des Trägerbands (7) eine kürzere Erstreckung hat, als der erste Bereich (10) des Positionierers (4).

7. Federbandschelle (1) nach Anspruch 6, **dadurch gekennzeichnet, dass** der dritte Bereich (12) des Positionierers (4) auf einer Innenseite (19) des Trägerbands einen stumpfen oder rechten Winkel mit dem zweiten Bereich des Positionierers einschließt.

8. Federbandschelle (1) nach Anspruch 7, **dadurch gekennzeichnet, dass** der dritte Bereich (12) des Positionierers (4) um ein Schlauchende eines Schlauches umbiegbar ist und hierbei der zweite Bereich (11) des Positionierers (4) in der axialen Richtung (A) an dem Schlauchende des Schlauchs anliegt.

9. Federbandschelle (1) nach einem der vorhergehenden Ansprüche, **dadurch gekennzeichnet, dass** der Halter (5) in einer, auf die Federbandschelle (1) bezogenen, radialen Richtung (R) das Schellenband (2) der Federbandschelle (1) zumindest teilweise umgreift.

10. Federbandschelle (1) nach einem der vorhergehenden Ansprüche, **dadurch gekennzeichnet, dass** der Halter (5) zumindest eine Haltelasche (15) aufweist, die als Ausformung des Trägerbands (7) ausgebildet ist.

## Claims

1. Spring band clip (1) having a clip band (2) and a positioning device (3) for prepositioning the spring band clip (1) on a hose end of a hose, wherein the positioning device (3) has a support band (7), a contact region (8) of which lies against an outer side (6) of the clip band (2), and the support band (7) has on one side, in an axial direction (A) with respect to the spring band clip (1), a positioner (4) having a fixer (13) arranged at the end of the support band (7) and has at another end of the support band (7) a retainer (5), wherein a web (9) in the support band (7) is formed between the contact region (8) and the positioner (4), which web is oriented inwards in a radial direction (R) with respect to the spring band clip (1), and the support band (7) has in the region of the positioner (4) at least two regions (10, 11), wherein the first region (10) adjoins the web (9) in the axial direction (A) away from the clip band and the second region (11) substantially perpendicularly adjoins the first region (10), wherein at least one notch (17) is provided in the region of the web (9), wherein the respective notch (17) makes it possible to bend a clamping tab (18) out from the support band (7) in the direction of the clip band (2), **characterized in that** the clamping tab (18) at least partially engages around the clip band (2) in a radial direction (R).

2. Spring band clip (1) according to one of the preceding claims, **characterized in that** the support band (7) has a smaller extent in a circumferential direction (U) of the spring band clip than in the axial direction (A).

3. Spring band clip (1) according to Claim 1, **characterized in that** the web (9), the positioner (4) and the retainer (5) lie axially outside the spring band clip (1).

4. Spring band clip (1) according to one of the preceding claims, **characterized in that** the web (9) lies against the side of the clip band (2).

5. Spring band clip (1) according to one of the preceding claims, **characterized in that** the contact region (8) has a bend in a circumferential direction (U) of the spring band clip.

6. Spring band clip (1) according to one of the preceding claims, **characterized in that** the positioner (4) has a third region (12), which has an extent along the support band (7) that is shorter than that of the first region (10) of the positioner (4) .

7. Spring band clip (1) according to Claim 6, **characterized in that** the third region (12) of the positioner (4) on an inner side (19) of the support band forms an obtuse or right angle with the second region of the positioner.

8. Spring band clip (1) according to Claim 7, **characterized in that** the third region (12) of the positioner (4) can be bent around a hose end of a hose, and in the process the second region (11) of the positioner (4) lies against the hose end of the hose in the axial direction (A).

9. Spring band clip (1) according to one of the preceding claims, **characterized in that** the retainer (5) at least partially engages around the clip band (2) of the spring band clip (1) in a radial direction (R) with respect to the spring band clip (1).

10. Spring band clip (1) according to one of the preceding claims, **characterized in that** the retainer (5) has at least one retaining tab (15), which is in the form of a shaped part of the support band (7) .

## Revendications

1. Collier de serrage à bande ressort (1) comprenant une bande de collier (2) et un dispositif de positionnement (3) pour le pré-positionnement du collier de serrage à bande ressort (1) sur une extrémité de tuyau d'un tuyau, le dispositif de positionnement (3) présentant une bande de support (7), qui s'applique par une zone d'appui (8) sur un côté extérieur (6) de la bande de collier (2), et la bande de support (7) présentant, dans une direction axiale (A), par rapport au collier de serrage à bande ressort (1), d'un côté un positionneur (4) comprenant un fixateur (13) agencé à l'extrémité de la bande de support (7), et présentant un élément de maintien (5) à une autre extrémité de la bande de support (7), une nervure (9) étant formée dans la bande de support (7) entre la zone d'appui (8) et le positionneur (4), qui est orientée vers l'intérieur dans une direction radiale (R), par rapport au collier de serrage à bande ressort (1), et la bande de support (7) présentant au moins deux zones (10, 11) dans la zone du positionneur (4), la première zone (10) se raccordant à la nervure (9) dans la direction axiale (A) à distance de la bande de collier et la deuxième zone (11) se raccordant essentiellement perpendiculairement à la première zone (10), au moins une entaille (17) étant prévue dans la zone de la nervure (9), une patte de serrage (18) pouvant être recourbée par l'entaille respective (17) en direction de la bande de collier (2) à partir de la bande de support (7), **caractérisé en ce que** la patte de serrage (18) entoure au moins partiellement la bande de collier (2) dans une direction radiale (R).

2. Collier de serrage à bande ressort (1) selon l'une quelconque des revendications précédentes, **caractérisé en ce que** la bande de support (7) présente une extension plus faible dans une direction circonférentielle (U) du collier de serrage à bande ressort que dans la direction axiale (A).

3. Collier de serrage à bande ressort (1) selon la revendication 1, **caractérisé en ce que** la nervure (9), le positionneur (4) et l'élément de maintien (5) sont situés axialement à l'extérieur du collier de serrage à bande ressort (1).

4. Collier de serrage à bande ressort (1) selon l'une quelconque des revendications précédentes, **caractérisé en ce que** la nervure (9) s'applique latéralement sur la bande de collier (2).

5. Collier de serrage à bande ressort (1) selon l'une quelconque des revendications précédentes, **caractérisé en ce que** la zone d'appui (8) présente une courbure dans une direction circonférentielle (U) du collier de serrage à bande ressort.

6. Collier de serrage à bande ressort (1) selon l'une quelconque des revendications précédentes, **caractérisé en ce que** le positionneur (4) présente une troisième zone (12) qui a, le long de la bande de support (7), une extension plus courte que la première zone (10) du positionneur (4).

7. Collier de serrage à ressort (1) selon la revendication 6, **caractérisé en ce que** la troisième zone (12) du positionneur (4) forme sur un côté intérieur (19) de la bande de support un angle obtus ou droit avec la deuxième zone du positionneur.

8. Collier de serrage à bande ressort (1) selon la revendication 7, **caractérisé en ce que** la troisième zone (12) du positionneur (4) peut être recourbée autour d'une extrémité de tuyau d'un tuyau et la deuxième zone (11) du positionneur (4) s'applique ainsi sur l'extrémité de tuyau du tuyau dans la direction axiale (A).

9. Collier de serrage à bande ressort (1) selon l'une quelconque des propositions précédentes, **caractérisé en ce que** l'élément de maintien (5) entoure au moins partiellement la bande de collier (2) du collier de serrage à bande ressort (1) dans une direction radiale (R) par rapport au collier de serrage à bande ressort (1) .

10. Collier de serrage à bande ressort (1) selon l'une quelconque des revendications précédentes, **caractérisé en ce que** l'élément de maintien (5) présente au moins une patte de maintien (15), qui est configurée en tant que formation de la bande de support (7).
